# DEMANDE DE BREVET EUROPEEN

(11) **EP 3 913 330 A1**
(43) Date de publication de la demande: **24.11.2021**
(21) Numéro de dépôt: 21174511.2
(22) Date de dépôt: 18.05.2021
(51) Int. Cl.: G01C 21/30, G05D 1/02

(54) **PROCEDE DE TELEASSISTANCE DE VEHICULE AUTONOME**

(30) Priorité: 19.05.2020 FR 2005084
(71) Demandeur: RENAULT S.A.S., 92100 Boulogne Billancourt (FR); ENSTA Paris, 91120 Palaiseau (FR)
(72) Inventeur: ARMAND, Alexandre, 78140 Vélizy-Villacoublay (FR); BARBIER, Mathieu, 78180 Montigny le Bretonneux (FR); BATTESTI, Emmanuel, 92340 Bourg-la-Reine (FR); FILLIAT, David, 91140 Villebon Sur Yvette (FR)
(74) Mandataire: Jacobacci Coralis Harle

(57) **Abrégé**

L'invention concerne un procédé de téléassistance pour véhicule automobile autonome dans lequel, après qu'il a reçu une requête d'assistance pour un véhicule automobile (10), un dispositif de téléassistance (20) est adapté à mettre en œuvre des étapes de :
- réception de la position du véhicule automobile,
- acquisition de premières informations émises par au moins une infrastructure de télésurveillance qui se trouve dans l'environnement immédiat du véhicule automobile,
- détermination d'au moins une première contrainte de calcul de trajectoire de roulage pour le véhicule automobile en fonction des premières informations acquises,
- calcul d'au moins une trajectoire de roulage en fonction de chaque première contrainte, et
- envoi de la trajectoire de roulage calculée au véhicule automobile.

## Description

### DOMAINE TECHNIQUE DE L'INVENTION

La présente invention concerne de manière générale l'assistance des véhicules autonomes en difficulté.

Elle concerne plus particulièrement un procédé de téléassistance pour véhicule automobile autonome.

Elle concerne également un dispositif de téléassistance adapté à mettre en œuvre un tel procédé.

L'invention trouve une application particulièrement avantageuse dans l'assistance de véhicules automobiles appartenant à une flotte de robots-taxis.

### ETAT DE LA TECHNIQUE

Les constructeurs de véhicules automobiles cherchent actuellement des solutions pour rendre leurs véhicules autonomes, ce qui permettra par exemple de proposer des services de taxis sans conducteur (appelés robots-taxis).

Malheureusement, les solutions actuelles ne sont pas en mesure de gérer tous les aléas du réseau routier (zones de travaux, zones d'accident...). Actuellement, ce genre de situations requière l'intervention d'un opérateur.

Pour garantir la continuité d'un service de robot-taxis, il est connu de demander l'assistance d'un opérateur à distance, ci-après appelé téléopérateur. C'est alors lui qui décide de la marche à suivre pour débloquer le véhicule automobile.

Pour cela, le téléopérateur doit disposer d'informations pertinentes, mais en nombre restreint.

Un surplus d'informations réduirait la vitesse de compréhension de la situation par le téléopérateur et surchargerait le réseau informatique. Un défaut d'informations serait au contraire dangereux.

La solution qui est alors actuellement employée consiste à envoyer au téléopérateur un flux vidéo filmé par une caméra avant du véhicule automobile. Bien que très utile, ce flux vidéo peut s'avérer insuffisant pour avoir une pleine compréhension de la situation dans laquelle se trouve le véhicule. En effet, le champ de vision de la caméra avant du véhicule est très limité, et certaines informations importantes peuvent être occultées ou trop éloignées du champ de vision.

Dans un registre différent, on connaît du document US20160033963 un système de conduite autonome comportant une caméra mobile sur le plafond d'un parking, et une unité de calcul permettant de localiser un véhicule, puis de commander le déplacement du véhicule dans le parking à l'aide des images acquises par la caméra, cette dernière étant alors pilotée pour suivre le véhicule automobile. Ce type de système n'est malheureusement pas applicable en extérieur.

### PRESENTATION DE L'INVENTION

Afin de remédier aux inconvénients précités de l'état de la technique, la présente invention propose de faciliter le travail du téléopérateur en lui transmettant d'autres informations utiles.

Plus particulièrement, on propose selon l'invention un procédé de téléassistance dans lequel, après qu'il a reçu une requête de téléassistance pour un véhicule automobile, un dispositif de téléassistance met en œuvre des étapes de :
- réception de la position du véhicule automobile,
- chargement d'une carte de navigation numérique de l'environnement immédiat du véhicule,
- acquisition de premières informations émises par au moins une infrastructure de télésurveillance qui se trouve dans l'environnement immédiat du véhicule automobile et qui est équipée d'un système de perception de premières informations relatives au véhicule automobile et/ou à l'environnement immédiat du véhicule automobile et d'un module d'échange desdites premières informations avec le dispositif de téléassistance,
- détermination d'un premier ensemble de contraintes de calcul de trajectoire de roulage pour le véhicule automobile en fonction des premières informations acquises,
- calcul d'au moins une trajectoire de roulage en fonction du premier ensemble de contraintes, et
- envoi de la trajectoire de roulage calculée au véhicule automobile.

Une contrainte est préférentiellement formée par une limite géographique bornant une partie de la zone d'évolution possible du véhicule automobile dans son environnement.

Ainsi, la solution proposée dans l'invention est applicable en extérieur et permet d'utiliser tout type d'infrastructure de télésurveillance (poteaux, bâtiments) équipée d'un système de perception (caméra, RADAR, LIDAR...) afin d'aider le téléopérateur à prendre de bonnes décisions.

Les informations acquises par les infrastructures de télésurveillance permettent d'obtenir des informations qui sont différentes de celles perceptibles depuis le véhicule automobile, et qui se trouvent être en général très pertinentes.

Sur la base de ces informations, le téléopérateur peut ainsi redélimiter la zone dans laquelle le véhicule peut rouler en modifiant les contraintes. De cette façon, l'interface de télé-opération peut trouver de nouvelles trajectoires pour débloquer le véhicule d'une situation de blocage.

D'autres caractéristiques avantageuses et non limitatives du procédé de téléassistance conforme à l'invention, prises individuellement ou selon toutes les combinaisons techniquement possibles, sont les suivantes :
- à l'étape d'acquisition, le dispositif de téléassistance acquiert des secondes informations émises par le véhicule automobile et mesurées par des moyens de perception de l'environnement immédiat du véhicule automobile ;
- à l'étape de détermination, le dispositif de téléassistance détermine au moins une seconde contrainte de calcul de trajectoire de roulage pour le véhicule automobile en fonction desdites secondes informations ;
- avant l'étape de calcul, il est prévu une étape de planification au cours de laquelle le dispositif de téléassistance est adapté à permettre à un téléopérateur de modifier manuellement un second ensemble de contraintes de calcul de trajectoire de roulage, ledit second ensemble contenant le premier ensemble de contraintes de calcul et ladite seconde contrainte de calcul ;
- à l'étape de calcul, chaque trajectoire de roulage est calculée en fonction dudit second ensemble de contraintes de calcul ;
- au cours de l'étape de planification, une unité de calcul du dispositif de téléassistance commande l'affichage sur un écran visible par un téléopérateur de ladite carte et, en superposition de c carte, de la position du véhicule automobile et dudit second ensemble de contraintes de calcul ;
- pour modifier manuellement ledit ensemble de contraintes de calcul, le téléopérateur peut ajouter au moins une autre contrainte de calcul ;
- pour modifier manuellement ledit ensemble de contraintes de calcul, le téléopérateur peut supprimer une des contraintes du second ensemble de contraintes de calcul ;
- pour modifier manuellement ledit ensemble de contraintes de calcul, le téléopérateur peut modifier une des contraintes du second ensemble de contraintes de calcul ;
- au cours de l'étape de planification, l'unité de calcul commande l'affichage sur ledit écran d'au moins un objet perçu par un moyen de perception équipant le véhicule automobile ;
- au cours de l'étape de planification, l'unité de calcul commande l'affichage sur ledit écran d'au moins un flux vidéo obtenu au moyen d'une caméra équipant le véhicule automobile, ledit flux vidéo représentant préférentiellement une vue d'oiseau de l'environnement immédiat du véhicule automobile ;
- au cours de l'étape de planification, l'unité de calcul commande l'affichage sur ledit écran d'au moins un flux vidéo obtenu au moyen d'une caméra équipant ladite infrastructure de télésurveillance ;
- à l'étape de calcul, plusieurs trajectoires de roulage sont calculées puis affichées sur un écran visible par un téléopérateur, puis le téléopérateur sélectionne l'une desdites trajectoires de roulage ;
- il est prévu de calculer, pour chaque trajectoire de roulage calculée, un indice de confiance relatif à la facilité pour le véhicule automobile de suivre ladite trajectoire de roulage, chaque indice de confiance étant ensuite affiché sur ledit écran ;
- après ladite étape d'envoi, il est prévu une étape de roulage au cours de laquelle le véhicule automobile démarre et suit la trajectoire de roulage de façon autonome, un téléopérateur surveillant le déplacement du véhicule automobile à l'aide des informations émises par chaque nouvelle infrastructure de télésurveillance entrant dans l'environnement immédiat du véhicule automobile ;
- lorsque plusieurs véhicules automobiles suivent une même portion de trajet et que l'un de ces véhicules automobiles est bloqué, il est prévu de grouper ces véhicules automobiles en fonction au moins de leurs positions, chaque groupe de véhicules automobiles étant ensuite affecté à un téléopérateur distinct.

L'invention concerne aussi un dispositif de téléassistance pour véhicule automobile autonome, comportant :
- des moyens de réception d'une requête d'assistance,
- des moyens d'acquisition de données émises par un véhicule automobile et par une infrastructure de télésurveillance qui se trouve dans l'environnement immédiat du véhicule automobile et qui est équipée d'un système de perception de premières informations, et
- une unité de calcul programmée pour mettre en œuvre un procédé tel que précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
La figure 1 est une vue schématique d'un dispositif de téléassistance adapté à mettre en œuvre un procédé de téléassistance conforme à l'invention ;
La figure 2 est une vue schématique d'une carte sur laquelle sont illustrés le véhicule automobile et la trajectoire qu'il doit emprunter ;
La figure 3 est une vue schématique de l'image affichée sur un écran du dispositif de téléassistance de la figure 1.

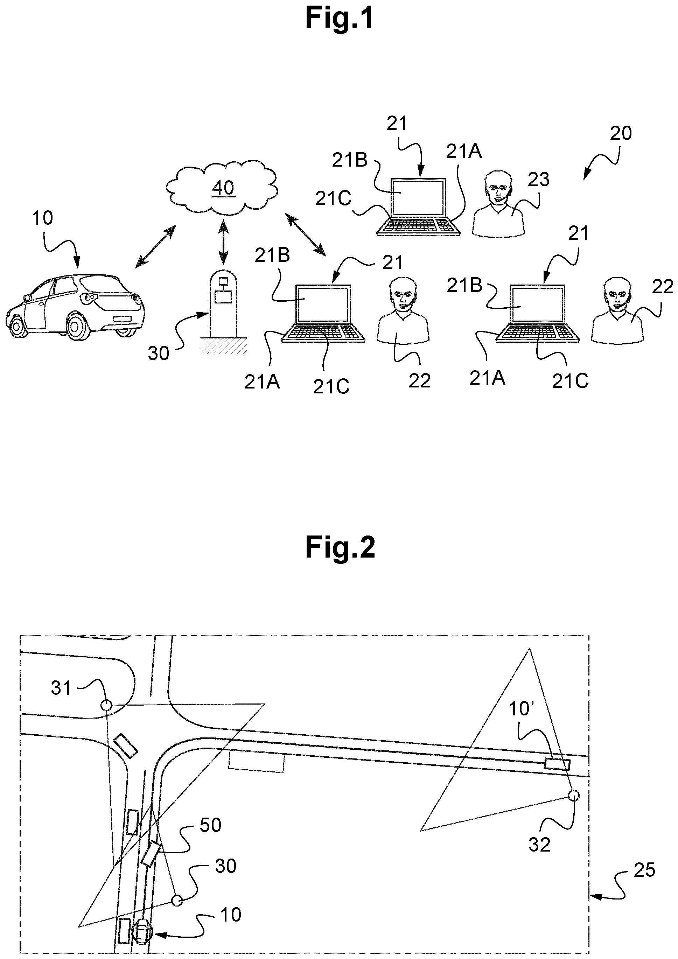

Sur la figure 1, on a représenté un véhicule automobile 10, une infrastructure de télésurveillance 30 et un dispositif de téléassistance 20, lesquels sont connectés ensemble pour pouvoir communiquer les uns avec les autres, ici via un service Internet 40.

Le véhicule automobile 10 comprend classiquement un châssis qui délimite un habitacle, et au moins deux roues directrices.

Ce véhicule automobile 10 comporte un système de direction permettant d'agir sur l'orientation des roues directrices de façon à pouvoir faire tourner le véhicule. Ce système de direction est commandé par un actionneur de direction assistée.

Il comporte également un système de freinage, commandé par un actionneur de freinage.

Il comporte aussi un groupe motopropulseur, comportant de préférence un moteur électrique.

Ce véhicule automobile 10 est du type autonome.

Il comporte pour cela des moyens de perception de l'environnement qui l'entoure, des moyens de géolocalisation et une unité de pilotage autonome du groupe motopropulseur et des actionneurs de freinage et de direction assistée.

Les moyens de perception comportent au moins une caméra frontale, permettant d'acquérir un flux vidéo représentant l'environnement à l'avant du véhicule automobile.

De préférence, ces moyens de perception comportent également :
- deux caméras latérales et une caméra arrière permettant d'acquérir des flux vidéo représentant l'environnement sur les côtés et à l'arrière du véhicule, et
- un ou plusieurs télédétecteurs RADAR ou LIDAR ou SONAR, permettant de détecter un obstacle se trouvant sur la trajectoire du véhicule automobile 10.

Les moyens de perception sont ainsi en mesure de détecter les objets évoluant autour du véhicule, et de fournir les informations relatives à ces objets (position, vitesse, type d'objet, etc).

Ces moyens de perception comportent de préférence un système de traitement d'images, de type AVM (de l'anglais « Around View Monitoring ») permettant, à partir des quatre flux vidéo, de reconstruire une image en vue d'oiseau représentant le véhicule automobile vu de dessus et son environnement proche.

Les moyens de géolocalisation comportent préférentiellement, d'une part, un système de cartographie qui mémorise des cartes de navigation numérique, c'est-à-dire des cartes détaillées des routes d'une zone particulière (un pays, une région...), et, d'autre part, une puce de géolocalisation qui permet de positionner précisément le véhicule automobile sur la carte. La puce peut employer une technologie de type GNSS (de l'anglais « Global Navigation Satellite System »), typiquement une technologie GPS ou GALILEO.

En variante, d'autres technologies sont utilisables, telles que les technologies de localisation relative du type SLAM (de l'anglais « simultaneous localization and mapping »).

L'unité de pilotage est programmée pour mettre en œuvre, conjointement avec le dispositif de téléassistance 20, le procédé de téléassistance qui sera décrit ci-après. Elle comporte à cet effet un processeur, une mémoire et des moyens de communication sans fil, tels que des moyens de téléphonie répondant à la norme 4G ou 5G.

L'unité de pilotage est programmée pour offrir au véhicule automobile 10 au moins deux modes de fonctionnement : un mode autonome et un mode téléopéré. Ici, il dispose d'un troisième mode, à savoir un mode manuel.

En mode autonome, le véhicule automobile évolue sans aide extérieure et sans aide humaine.

En mode manuel, un conducteur conduit le véhicule automobile de façon classique.

En mode téléopéré, le véhicule automobile s'arrête et attend des instructions du dispositif de téléassistance 20 pour ensuite évoluer sous surveillance de ce même dispositif.

Dans l'exemple qui sera ici considéré, le véhicule automobile 10 fait partie d'une flotte de robots-taxis.

Le dispositif de téléassistance 20 comporte au moins un poste de téléassistance 21 à la disposition d'un téléopérateur 22.

En pratique, il comporte ici plusieurs postes de téléassistance 21 situés dans un même lieu qu'on peut appeler « tour de contrôle », l'un des postes étant à la disposition d'un superviseur 23 dont la fonction sera décrite à la fin de cet exposé.

De préférence, il est prévu plusieurs tours de contrôle situées dans des fuseaux horaires différents, de façon à ce qu'un téléopérateur 22 soit disponible vingt-quatre heures sur vingt-quatre, si un véhicule automobile de la flotte nécessite une assistance.

Chaque poste de téléassistance 21 comporte une unité de calcul 21A programmée pour mettre en œuvre, conjointement avec l'unité de pilotage du véhicule automobile 10, le procédé de téléassistance qui sera décrit ci-après. Elle comporte à cet effet un processeur, une mémoire et des moyens de communication sans fil, tels que des moyens de téléphonie répondant à la norme 4G ou 5G.

Chaque poste de téléassistance 21 comporte également un écran d'affichage 21B qui permet au téléopérateur 22 de visualiser l'environnement autour du véhicule automobile 10 afin de comprendre la situation dans laquelle ce dernier se trouve.

Enfin, chaque poste de téléassistance 21 comporte une interface homme-machine, se présentant par exemple sous la forme d'un clavier et/ou d'une souris et/ou d'un écran tactile et permettant au téléopérateur 22 de fournir des instructions à l'unité de calcul 21 A.

On considérera ici que le véhicule évolue dans une zone dans laquelle se trouvent des infrastructures de télésurveillance 30, telles que par exemple des poteaux, bâtiments ou autres, qui sont équipés de moyens de perception tels que des caméras ou des télédétecteurs.

Ces infrastructures de télésurveillance 30 comportent alors une unité de traitement programmée pour mettre en œuvre, conjointement avec l'unité de calcul 21A du poste de téléassistance 21, le procédé de téléassistance qui sera décrit ci-après. Elle comporte à cet effet un processeur, une mémoire et des moyens de communication sans fil, tels que des moyens de téléphonie répondant à la norme 4G ou 5G.

On peut maintenant décrire le procédé de téléassistance, tel qu'il sera mis en œuvre par l'unité de calcul 21A du poste de téléassistance 21 sous la supervision du téléopérateur 22.

L'étape préalable à la mise en œuvre de ce procédé consiste, pour le véhicule automobile 10, à émettre une requête de téléassistance lorsque la situation le nécessite.

La situation peut typiquement le nécessiter lorsque le véhicule automobile 10 se trouve bloqué, du fait par exemple d'une zone de travaux ou d'accident.

Sur la figure 2, on a représenté une carte 25 représentant, vue de dessus, une telle situation. On y observe que le véhicule automobile 10, en mode autonome, est bloqué par un véhicule accidenté 50 qui se trouve sur sa voie. On y observe qu'une ligne continue empêche le véhicule automobile 10 de doubler le véhicule accidenté 50.

Dans cette situation, la requête est alors émise de façon autonome par l'unité de pilotage du véhicule automobile 10 car cette dernière n'est pas en mesure de gérer seule cette situation.

On pourrait en variante prévoir que la requête soit émise non pas par le véhicule automobile 10, mais par exemple par le véhicule accidenté (qui prévient qu'il va bloquer la circulation), ou par tout autre élément communiquant (un autre véhicule, une infrastructure de télésurveillance...).

Lorsqu'il reçoit la requête, qui s'affiche ici sur l'écran 21B sous la forme d'un message, le téléopérateur 22 doit l'accepter pour que le procédé de téléassistance puisse débuter.

Alors, le véhicule automobile 10 émet des informations telles que par exemple sa position géolocalisée, sa vitesse, les objets détectés dans son environnement, le flux vidéo émis par sa caméra frontale ou celui émis par le système AVM...

S'il était en mode autonome avant de demander une assistance, le véhicule automobile 10 transmet aussi le trajet qu'il suivait et la cause de sa requête (véhicule bloquant, embouteillage...).

L'unité de calcul 21A du poste de téléassistance 21 reçoit alors ces informations en temps réel et il les affiche sur l'écran 21 B.

Elle télécharge en parallèle sur un réseau local ou externe (par exemple le réseau Internet) une carte 25 de navigation numérique de l'environnement immédiat du véhicule.

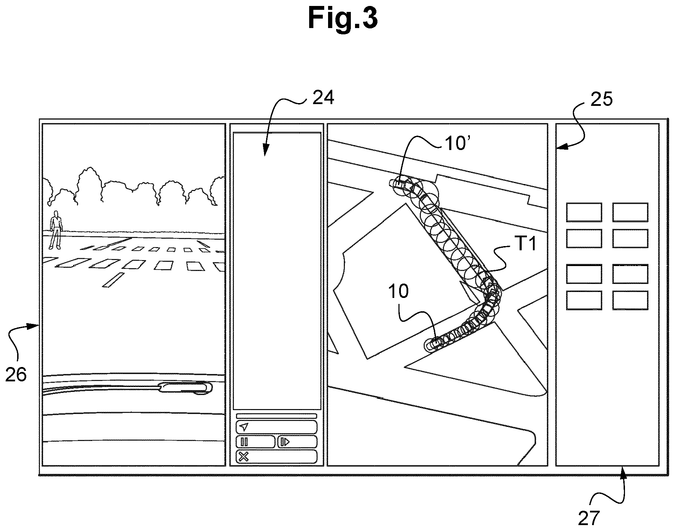

Sur la figure 3, on a représenté un exemple d'affichage des informations sur l'écran 21 B.

Sur cet exemple, les informations sont affichées sur quatre fenêtres situées côte-à-côte.

Sur la fenêtre de gauche, on observe le flux vidéo 26 acquis par la caméra frontale du véhicule automobile 10. Sur la fenêtre centrale de droite, on observe la carte 25, ainsi que la position du véhicule automobile 10, les objets détectés par le véhicule et/ou par les infrastructures de télésurveillance 30, et le trajet que le véhicule suivait. Sur la fenêtre centrale de gauche 24, ce sont les autres informations jugées utiles qui sont affichées (vitesse du véhicule, qualité de la connexion entre le véhicule automobile 10 et le dispositif de téléassistance 20...). On y affiche également deux boutons permettant au téléopérateur d'indiquer au véhicule s'il peut redémarrer ou s'il doit s'arrêter. Enfin, sur la fenêtre de droite 27, des boutons sont affichés et permettent de choisir entre plusieurs méthodes de calcul de trajectoires et de lancer le calcul de trajectoire.

Sur la carte, on peut prévoir de faire ressortir, par exemple en le faisant clignoter, l'objet qui est à l'origine de la requête (ici le véhicule accidenté 50).

Sur la fenêtre centrale, on peut également afficher un bouton permettant au téléopérateur de demander l'affichage de davantage d'informations, telles que par exemple les flux des autres caméras embarquées dans le véhicule automobile 10.

Sur la carte 25, on pourrait également afficher le flux vidéo vu d'oiseau de l'environnement du véhicule, issu du système AVM.

Comme le montre bien la figure 2, sur laquelle on a représenté un autre exemple de carte 25, il peut arriver que des infrastructures de télésurveillance 30, 31, 32 se trouvent dans l'environnement immédiat du véhicule automobile 10.

On entend par « environnement immédiat » une zone géographique proche du véhicule, qui est par exemple située à une distance du véhicule automobile 10 inférieure à un seuil (par exemple 100 mètres). En variante, cette zone pourrait être définie autrement. L'environnement immédiat pourrait ainsi par exemple être constitué de la zone géographique dans laquelle les infrastructures de télésurveillance ont potentiellement la possibilité de voir le véhicule automobile 10 s'il se trouve dans leur champ de vision.

Ici, toutes les infrastructures de télésurveillance se trouvant dans la zone géographique représentée sur la carte 25 sont considérées. Elles sont alors toutes affichées sur cette carte 25, sous la forme d'un point marquant leur position, et d'un cône illustrant leur champ de vision.

Si le véhicule automobile 10 se trouve dans le champ de vision de l'une de ces infrastructures de télésurveillance 30, l'unité de calcul 21A est programmée pour afficher sur l'écran 21B une fenêtre avec le flux vidéo capturé par la caméra de cette infrastructure de télésurveillance. Cet affichage est ici automatique mais il pourrait en variante requérir l'assentiment du téléopérateur 22.

Les informations émises par ces infrastructures de télésurveillance sont en général très utiles au téléopérateur pour identifier les zones par lesquelles le véhicule automobile pourrait évoluer.

Quoi qu'il en soit, l'unité de calcul 21A du poste de téléassistance 21 traite ensuite l'ensemble des informations reçues du véhicule automobile 10 et des infrastructures de télésurveillance 30, 31, 32. L'objectif est d'afficher sur l'écran 21B l'ensemble des contraintes que le véhicule automobile 10 doit prendre en compte pour évoluer. Ces contraintes délimitent en effet la zone dans laquelle le véhicule automobile 10 est normalement autorisé à rouler.

Ici, à titre d'exemple, les principales contraintes sont :
- la ligne continue à gauche du véhicule automobile 10,
- le bord du trottoir à droite du véhicule automobile 10, et
- le véhicule accidenté 50 à l'avant du véhicule automobile 10.

Ces contraintes sont initialement issues de la carte 25 numérique de navigation, qui mémorise en effet ici des caractéristiques des routes empruntées (la route est bordée de lignes continues ou discontinues, présence d'un panneau de signalisation, présence d'un trottoir, présence d'un dos d'âne...).

La liste de contrainte est ensuite complétée à l'aide des informations reçues du véhicule automobile 10 et des infrastructures de télésurveillance 30, 31, 32. Typiquement, ici, la présence du véhicule accidenté ne se trouve pas dans la carte 25 mais est détectée à l'aide des informations reçues du véhicule automobile 10 et des infrastructures de télésurveillance 30, 31.

Les informations illustrées sur l'écran 21B sont mises à jour en temps réel. Les contraintes y sont ici représentées sous forme de lignes à droite et à gauche du véhicule, et d'un rectangle à l'avant du véhicule automobile 10.

La planification d'une trajectoire pour le véhicule automobile lui permettant de se sortir de cette situation de blocage se fait ici en plusieurs étapes successives.

La première étape consiste, pour le téléopérateur 22, à indiquer la position 10' où il souhaite que le véhicule automobile se rende en mode téléopéré, ainsi que l'orientation qu'il devra alors présenter.

La seconde étape consiste, toujours pour le téléopérateur 22, à redéfinir l'espace navigable dans lequel le véhicule automobile 10 pourra circuler.

Cet espace navigable est initialement défini à partir de contraintes géographiques, notamment à partir de celles illustrées sur la carte 25 (bords de route, marquages au sol normalement infranchissables par le véhicule, objets statiques perçus par le véhicule).

Le téléopérateur peut alors redéfinir ces contraintes géographiques en en modifiant, en en ajoutant et en en supprimant manuellement, à l'aide par exemple du clavier 21C.

Il peut ainsi ajouter des objets non détectés par le système de perception du véhicule mais détectés par l'opérateur via l'un des flux vidéo qu'il a à sa disposition. Pour cela, le téléopérateur localise sur la carte 25 affichée sur son écran ces objets, ainsi que l'espace qu'ils occupent.

Le téléopérateur peut également corriger la forme ou supprimer une contrainte telle qu'un marquage au sol ou un bord de route lorsque ce dernier est franchissable par le véhicule, sans générer de problème de sécurité, et qu'il permet de faciliter la mission de téléassistance.

Le téléopérateur peut aussi supprimer des objets détectés à tort par les moyens de perception du véhicule.

L'unité de calcul 21A du poste de téléassistance 21 peut alors calculer au moins une trajectoire partant de la position instantanée du véhicule automobile 10 et allant jusqu'à la position 10' où le téléopérateur 22 souhaite que le véhicule automobile se rende, et qui respecte les contraintes redéfinies par le téléopérateur 22.

Si plusieurs trajectoires sont possibles, elles sont toutes proposées au téléopérateur 22 (pour autant que leurs longueurs ne soient pas beaucoup plus importantes que celle de la trajectoire de plus courte longueur). Chaque trajectoire est alors dessinée sur la carte 25.

On observe ainsi, sur la figure 3, l'espace dans lequel le véhicule peut rouler, et une trajectoire T1 que le véhicule peut emprunter (illustrée par deux traits correspondant à l'empreinte du véhicule le long de sa trajectoire, c'est-à-dire à la surface d'occupation du sol par le véhicule lorsqu'il se déplace le long de cette trajectoire).

Chaque trajectoire est calculée en tenant compte des objets mobiles qui évoluent autour du véhicule automobile 10 et en fonction des caractéristiques du véhicule automobile (rayon de braquage, accélération maximum...).

De manière préférentielle, lorsque plusieurs trajectoires sont envisagées, l'unité de calcul 21A détermine un indice de confiance pour chaque trajectoire.

Chaque indice de confiance renseigne le téléopérateur 22 sur la facilité qu'aura le véhicule automobile 10 à suivre cette trajectoire.

L'indice de confiance associé à chaque trajectoire est calculé en fonction au moins de l'un des paramètres suivants, et de préférence en fonction de l'ensemble des paramètres suivants.

Le premier paramètre est relatif aux performances de l'unité de pilotage du véhicule automobile 10, qui peuvent par exemple être notées entre 1 et 5 en fonction de la version du logiciel implanté dans cette unité de pilotage. Plus la version du logiciel sera récente, plus ce chiffre sera élevé et plus l'indice de confiance sera grand.

Le second paramètre est la quantité d'infrastructures de télésurveillance 30, 31, 32 présentes le long de la trajectoire. Plus leur nombre est élevé, plus l'indice de confiance sera grand.

Le troisième paramètre est la promiscuité de la trajectoire avec l'itinéraire que le véhicule suivait en mode autonome, avant qu'il n'émette une requête de téléassistance. Plus l'écart est réduit, plus l'indice de confiance sera grand.

Le quatrième paramètre est la nécessité d'enfreindre des règles du Code de la route (rouler sur voie de gauche en sens inverse, franchir une ligne continue...). Plus le nombre d'écarts avec le Code de la route est élevé, plus l'indice de confiance sera réduit.

Le cinquième paramètre est relatif au confort ressenti par les passagers. Ainsi, plus le nombre et/ou l'intensité des à-coups du volant sont élevés (c'est-à-dire moins la trajectoire est souple), plus l'indice de confiance sera réduit.

Le sixième paramètre concerne la distance entre la trajectoire et les obstacles environnants. Par exemple, plus la distance entre la trajectoire et l'obstacle le plus proche de cette dernière sera grand, plus l'indice de confiance sera élevé.

En variante, d'autres paramètres pourraient être utilisés.

Ici, les indices de confiance sont alors affichés sur l'écran 21B.

A ce stade, on pourrait prévoir que l'unité de calcul 21A sélectionne automatiquement la trajectoire pour laquelle l'indice de confiance est le plus élevé.

Toutefois, ici, c'est le téléopérateur qui choisit la trajectoire qui lui semble la plus efficace. Il réalise ce choix en s'aidant des indices de confiance affichés.

Une fois choisie, la trajectoire est transmise à l'unité de pilotage du véhicule automobile 10.

Comme s'il était en mode autonome, le véhicule démarre alors pour suivre cette trajectoire, en tenant compte des informations relevées par ses moyens de perception.

Ainsi, si des objets imprévus apparaissent et changent la situation, par exemple si un piéton est sur le point de croiser la trajectoire que le véhicule est en train de suivre, alors le véhicule adaptera naturellement sa vitesse. Il ne s'écartera en revanche pas de la trajectoire prévue, sauf en cas de collision imminente.

Durant son déplacement, l'unité de pilotage du véhicule automobile 10 continue de transmettre à l'unité de calcul 21A du poste de téléassistance 21 les informations de télémétrie, les flux vidéo et l'ensemble des données nécessaires et souhaitées par le téléopérateur 22.

De cette façon, le téléopérateur 22 peut suivre en temps réel l'évolution du véhicule automobile 10 et veiller à ce que tout se déroule comme prévu.

Lorsque le véhicule évolue, si l'unité de calcul 21A détecte que le véhicule automobile 10 entre dans une zone couverte par une infrastructure de télésurveillance 31, 32, 33, elle affiche automatiquement les informations relevées par cette infrastructure sur l'écran 21B afin que le téléopérateur dispose de toutes les informations utiles pour surveiller l'évolution du véhicule automobile 10.

De manière préférentielle, le téléopérateur 22 dispose de la possibilité de commander l'arrêt immédiat du véhicule automobile 10. Il peut alors user de cette possibilité par exemple s'il détecte un danger, ou s'il souhaite modifier la trajectoire à suivre.

Préférentiellement encore, le téléopérateur dispose de la possibilité de commander le retour du véhicule en marche arrière sur une partie de la trajectoire parcourue. Cette fonctionnalité peut d'avérer utile si le véhicule se retrouve bloqué à nouveau.

Une fois que le véhicule automobile 10 a atteint la position 10' où le téléopérateur 22 souhaitait qu'il se rende, l'unité de calcul 21A demande au téléopérateur 22 de valider le basculement du mode de fonctionnement du véhicule depuis le mode téléopéré vers le mode autonome ou manuel.

Si l'opérateur confirme que la mission est terminée, le véhicule bascule dans le mode choisi et arrête la transmission des informations de télémétrie, des flux vidéo, etc.

La présente invention n'est nullement limitée au mode de réalisation décrit et représenté, mais l'homme du métier saura y apporter toute variante conforme à l'invention.

Ainsi, en variante, l'unité de calcul 21A du poste de téléassistance 20 pourra être programmée pour assurer une gestion particulière des situations de blocage, lorsque plusieurs véhicules de la flotte se trouvent dans une même région géographique et passent par une même portion de trajet.

Pour illustrer cette variante, on peut envisager le cas où un véhicule de la flotte se trouve bloqué par une voiture accidentée et où plusieurs autres véhicules se dirigent vers la même zone d'accident.

Dans cette situation, l'unité de calcul 21A du poste de téléassistance 21 du superviseur génère une alerte qui s'affiche sur son écran 21B.

Elle affiche en outre une carte représentant la position de chacun des véhicules automobiles de la flotte concernés par cette alerte.

Le superviseur 23 réalise alors des groupes d'un ou de plusieurs véhicules automobiles et il leur affecte des attributs différents en fonction de la situation dans laquelle ils se trouvent.

On peut alors prévoir que les groupes de véhicules soient affectés à des téléopérateurs 22 différents. Dans ce cas, l'attribut sert seulement à identifier les véhicules par groupe et par opérateur.

Toutefois, ici, les attributs servent également à affecter des objectifs différents aux différents groupes de véhicule(s).

Par exemple, dans le cas où un premier véhicule se trouve bloqué à une sortie d'intersection par une voiture accidentée, et où deux autres véhicules arrivent sur l'intersection, l'attribut affecté au premier véhicule assigne un objectif à atteindre qui est un lieu situé au-delà de la voiture accidentée, tandis que l'attribut affecté au groupe de deux véhicules assigne un objectif de changement de direction. Les deux groupes de véhicules sont ensuite affectés à deux téléopérateurs 22 différents, ce qui permet d'éviter des conflits entre différents téléopérateurs.

Le processus de téléassistance se poursuit ensuite de la même façon que précité, à ceci près que les deux véhicules groupés n'ont pas à émettre de requête d'assistance, cette dernière étant générée par l'unité de calcul 21A du poste du superviseur 23.

S'agissant du groupe de deux véhicules, on notera que les contraintes ajoutées ou modifiées par le téléopérateur 22 seront communes pour les deux véhicules, ce qui évitera au téléopérateur de répéter les opérations pour ces deux véhicules.

Ensuite, le téléopérateur 22 pourra commander le démarrage des deux véhicules de manière séquentielle (le second démarre seulement lorsque le premier a atteint la position 10' souhaitée), ou de manière concomitante. Dans ce second cas, les véhicules sont pilotés de façon à rester proches l'un de l'autre, de manière que le groupe de véhicule se déplace à la façon d'une rame de train. L'avantage est alors de gagner en vitesse de déblocage pour une flotte de véhicules.

Selon une autre variante du mode de réalisation décrit en référence aux figures, on pourra prévoir que le téléopérateur puisse avoir accès aux données mesurées par les moyens de perception des véhicules tiers qui se trouvent dans l'environnement immédiat du véhicule automobile. Ainsi pourra-t-il par exemple consulter des flux-vidéo filmés par les caméras des véhicules tiers de façon à obtenir des images sous un autre angle de vue.

## Revendications

1. Procédé de téléassistance pour véhicule automobile autonome dans lequel, après qu'il a reçu une requête d'assistance pour un véhicule automobile (10), un dispositif de téléassistance (20) est adapté à mettre en œuvre des étapes de :
- réception de la position du véhicule automobile (10),
- chargement d'une carte (25) de navigation numérique de l'environnement immédiat du véhicule automobile (10),
- acquisition de premières informations émises par au moins une infrastructure de télésurveillance (30, 31, 32) qui se trouve dans l'environnement immédiat du véhicule automobile (10) et qui est équipée d'un système de perception de premières informations relatives au véhicule automobile (10) et/ou à l'environnement immédiat du véhicule automobile (10) et d'un module d'échange desdites premières informations avec le dispositif de téléassistance (20),
- détermination d'au moins un premier ensemble de contraintes de calcul de trajectoire de roulage pour le véhicule automobile (10) en fonction des premières informations acquises,
- calcul d'au moins une trajectoire de roulage (T1) en fonction du premier ensemble de contraintes, et
- envoi de la trajectoire de roulage (T1) calculée au véhicule automobile (10).

2. Procédé de téléassistance selon la revendication précédente, dans lequel :
- à l'étape d'acquisition, le dispositif de téléassistance (20) acquiert des secondes informations émises par le véhicule automobile (10) et mesurées par des moyens de perception de l'environnement immédiat du véhicule automobile (10),
- à l'étape de détermination, le dispositif de téléassistance (20) détermine au moins une seconde contrainte de calcul de trajectoire de roulage pour le véhicule automobile (10) en fonction desdites secondes informations,
- avant l'étape de calcul, il est prévu une étape de planification au cours de laquelle le dispositif de téléassistance (20) est adapté à permettre à un téléopérateur (22) de modifier manuellement un second ensemble de contraintes de calcul de trajectoire de roulage contenant le premier ensemble de contraintes de calcul et ladite au moins une seconde contraintes de calcul, et
- à l'étape de calcul, chaque trajectoire de roulage (T1) est calculée en fonction dudit second ensemble de contraintes de calcul.

3. Procédé de téléassistance selon la revendication précédente, dans lequel, au cours de l'étape de planification, une unité de calcul (21A) du dispositif de téléassistance (20) commande l'affichage sur un écran (21B) visible par un téléopérateur (22) de ladite carte (25) et, en superposition de cette carte (25), de la position du véhicule automobile (10) et dudit second ensemble de contraintes de calcul.

4. Procédé de téléassistance selon la revendication précédente, dans lequel, pour modifier manuellement ledit second ensemble de contraintes de calcul, le téléopérateur (22) peut ajouter au moins une autre contrainte de calcul ou supprimer une contrainte dudit second ensemble de contraintes de calcul.

5. Procédé de téléassistance selon l'une des deux revendications précédentes, dans lequel, au cours de l'étape de planification, l'unité de calcul (21A) commande l'affichage sur ledit écran (21 B) :
- d'au moins un objet perçu par un moyen de perception équipant le véhicule automobile (10), et/ou
- d'au moins un flux vidéo (26) obtenu au moyen d'une caméra équipant le véhicule automobile (10), ledit flux vidéo (26) représentant préférentiellement une vue d'oiseau de l'environnement immédiat du véhicule automobile (10).

6. Procédé de téléassistance selon l'une des revendications précédentes, dans lequel, à l'étape de calcul, plusieurs trajectoires de roulage (T1) sont calculées puis affichées sur un écran (21 B) visible par un téléopérateur (22), puis le téléopérateur (22) sélectionne l'une desdites trajectoires de roulage (T1).

7. Procédé de téléassistance selon la revendication précédente, dans lequel il est prévu de calculer, pour chaque trajectoire de roulage calculée, un indice de confiance relatif à la facilité pour le véhicule automobile (10) de suivre ladite trajectoire de roulage, chaque indice de confiance étant ensuite affiché sur ledit écran (21B).

8. Procédé de téléassistance selon l'une des revendications précédentes, dans lequel après ladite étape d'envoi, il est prévu une étape de roulage au cours de laquelle le véhicule automobile (10) démarre et suit la trajectoire de roulage (T1) de façon autonome, un téléopérateur surveillant le déplacement du véhicule automobile (10) à l'aide des informations émises par chaque nouvelle infrastructure de télésurveillance (30, 31, 32) entrant dans l'environnement immédiat du véhicule automobile (10).

9. Procédé de téléassistance selon l'une des revendications précédentes, dans lequel, lorsque plusieurs véhicules automobiles (10) suivent une même portion de trajet et que l'un de ces véhicules automobiles (10) est bloqué, il est prévu de grouper les véhicules automobiles en fonction au moins de leurs positions, chaque groupe de véhicules automobiles étant affecté à un téléopérateur (22) distinct.

10. Dispositif de téléassistance (20) pour véhicule automobile autonome, comportant :
- des moyens de réception d'une requête d'assistance,
- des moyens d'acquisition de données émises par un véhicule automobile (10) et par une infrastructure de télésurveillance (30, 31, 32) qui se trouve dans l'environnement immédiat du véhicule automobile (10) et qui est équipée d'un système de perception de premières informations, et
- une unité de calcul (21A) programmée pour mettre en œuvre un procédé conforme à l'une des revendications précédentes.
